**Europäisches Patentamt**

**European Patent Office**

**Office européen des brevets**

(11) Publication number: **0 069 100**
**B1**

## (12) EUROPEAN PATENT SPECIFICATION

(45) Date of publication of patent specification: **10.12.86**

(21) Application number: **82850140.3**

(22) Date of filing: **22.06.82**

(51) Int. Cl.⁴: **G 09 F 3/06, H 01 B 13/00, H 01 B 7/36**

(54) A device for the marking of electrical wires and cables, pipes or the like and a method of manufacturing the same.

(30) Priority: **23.06.81 SE 8103918**

(43) Date of publication of application:
**05.01.83 Bulletin 83/01**

(45) Publication of the grant of the patent:
**10.12.86 Bulletin 86/50**

(84) Designated Contracting States:
**AT BE CH DE FR GB IT LI NL SE**

(56) References cited:
**DE-U-1 960 972**
**GB-A-1 167 313**
**GB-A-1 399 004**
**US-A-1 353 531**
**US-A-3 822 773**

(73) Proprietor: **Jaffe, Walther**
**Pl 6530 Skaven**
**S-531 00 Lidköping (SE)**

(72) Inventor: **Jaffe, Walther**
**Pl 6530 Skaven**
**S-531 00 Lidköping (SE)**

(74) Representative: **Roth, Ernst Adolf Michael et al**
**GÖTEBORGS PATENTBYRA AB Box 5005**
**S-402 21 Göteborg (SE)**

Courier Press, Leamington Spa, England.

# Description

The present invention relates to a device for the marking of elongated objects such as electrical single wires or cables, tubes, pipes or the like and comprising a substantially flat, oblong piece of material having an intermediate portion and end portions said end portions being provided with openings and further being capable of bending relative to said intermediate portion for moving said openings into substantial axial alignment, said intermediate portion between said opening being adapted for carrying marking symbols.

According to existing regulations, the marking of electrical wires and cables as well as the marking of pipes for pressurized fluid must be made in such a way that the markings are permanent and readily legible.

A number of devices for this purpose are previously known, for instance label frames of a more or less complicated design. It is also known to use sleeve-shaped members with a printed marking, which are pushed on to a wire or the like.

Such marking of single wires is commonly effected by means of separate sleeves, which are mounted separately on the wire, which has the drawback that the separate elements of the identifying marking are capable of independently turning around and moving along the wire, which may lead to misinterpretation of the marking, for instance when individual characters become separated. This drawback may be overcome by providing all the characters of the marking on a single continuous sleeve, but this would necessitate to keep a large assortment of marking sleeves in stock considering the variety of character combinations and the varying diameters of wires, cables and tubes. Also, the printed markings on sleeves of this type is unprotected and very often gets partly rubbed off and obscured by dirt.

Another type of known marking sleeves are adapted to have inserted into them labels or strips carrying the identifying marking. Some marking sleeves of this type have the drawback that the inserted label may fall out of the sleeve, whereas other forms of this type necessitate separate and more complicated attachment means, which makes the marking more expensive and complicated.

Another known type of device is a label holder into which a label indicating a name, an address or the like is inserted. Such marking devices are used for instance as address tags on luggage. In this case, too, a special attachment means is needed for attaching the label to the object to be marked. A label holder of this general type is shown in the British patent specification 556,750.

In FR—A—873.434 is disclosed a marking device with end portions provided with circular or partcircular holes and which are bent relative to the intermediate portion which is provided with marking symbols.

In GB—A—1.399.004 is disclosed a device for closing the neck of a bag and which device also can be provided with marking symbols. The device is provided with a plurality of slits radiating outwardly from a common central point so as to define a plurality of inwardly projecting flexible tabs. The tabs can engage around and resiliently grip to the neck of the bag.

The object of the present invention is to provide a very simple marking device, which is cheap in manufacture and may very easily be applied to the object which is to be marked. Another object of the invention is to provide a marking device which can easily be displaced on the object and which is capable of being very firmly attached to the object in the desired position.

A further object of the invention is to provide a marking device which can accommodate varying diameters of the objects to be marked, so that a considerably reduced number of sizes will be required for covering a wide range of diameters of the wires, cables or tubes. Thus, the users need only stock a small number of different sizes.

These objects have been attained by providing a marking device of the kind set forth, wherein the device is made of a material which is at least slightly resilient, so that the material tends to straighten out the bent-around end portions, that each opening is wedge-shaped, tapering off towards the ends of the marking device, the broader end of the opening located adjacent to said intermediate portion being of a dimension such that the opening will easily receive the elongated object when the end portions are bent relative to the intermediate portion and the narrower portion of the opening being of a dimension such that the side edges of the opening will frictionally engage the elongated object when said end portions of the marking device are straightened out.

It is also an object of the invention to provide a simple and efficient method of manufacturing marking devices of this kind. The method consists in that a sheet of a flexible, slightly resilient material is provided with a number of spaced, printed legends each constituting the marking of a marking device, and that a marking device in the form of an oblong piece of material with an opening at each end is stamped out of the material around each printed legend, leaving easily breakable connecting bridges maintaining the marking devices connected with the sheet.

The invention will be more closely described herebelow with reference to the accompanying drawings, which show some embodiments of the invention.

Figure 1 is a view in perspective of a tool for producing marking devices according to the invention from a continuous strip of material,

Figure 2 shows a portion of a sheet material wherein marking devices are printed and partially punched out,

Figure 3 shows marking devices according to the present invention said marking devices are punched out of but not completely separated from a sheet of material.

Figure 4a and b shows the marking device of Figure 3 and illustrates that when bending the marking device it can be displaced on a wire and when straightened it is attached to the wire by wedge-action.

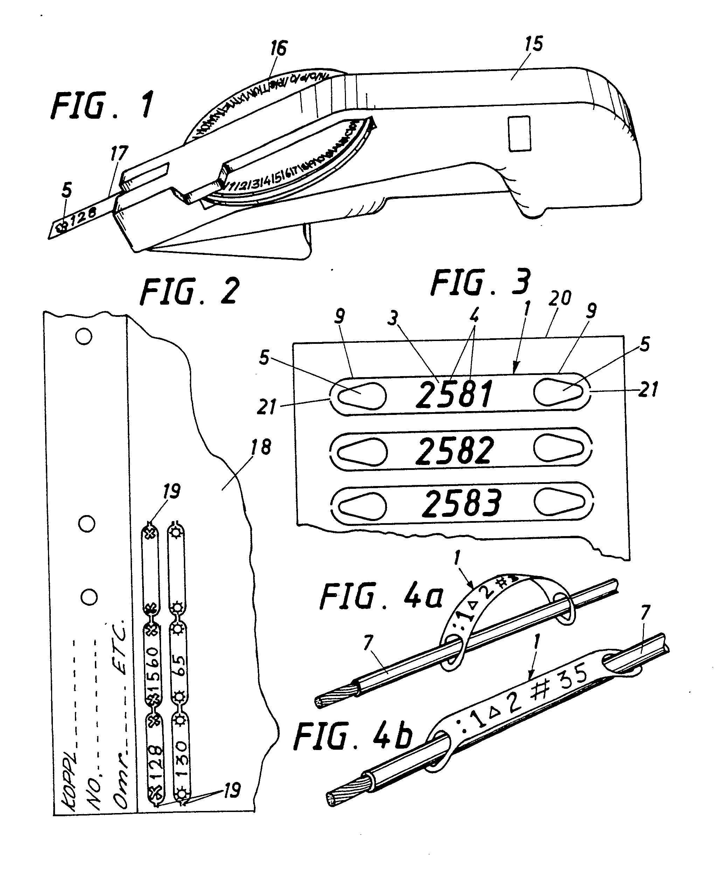

In the embodiment illustrated in Figure 3, the marking device 1 is made of a transparent and preferably slightly resilient material, such as plastic. The device is of oblong shape and has a central portion 3 on which the marking 4 is written or printed. At both ends, the device is provided with rounded lug portions 9 provided with openings 5 having a wedge-like shape tapering off towards the ends of the device. Due to this shape of the openings the marking device can be used on wires etc. with diameters ranging from the width of the wider end of the opening to the width of the narrower end. When bending the marking device 3 as is shown in Figure 4a it is easily displaced on a wire 7, which passes through the wider portion of the openings 5. When straightened out as is shown in Figure 4b the resiliency of the material will cause the marking device to hold the wire wedged between the tapering sides of the openings. This shape of the openings 5 may of course also be applied to any other embodiment of marking devices according to the invention.

The manufacturing of the marking device according to the embodiments so far described may be made either by injection moulding or by stamping out from an extruded material in the form of a rectangular hollow profile. The marking devices may also be stamped out directly from a flat, resilient PVC-material in the form of thinner sheets. In both methods of production, a narrow bridge of material may be left between each marking device. In this way the marking devices may be stored in the form of rolls, strips or sheets, so that the marking devices may be broken off as they are used, the lug portions thereafter being bent around for placing the marking device on the wire, cable or the like.

For certain applications it would be possible to manufacture the marking device according to the invention from a tape of similar type as that used in embossing tools for providing embossed lettering on marking tape. Such a tool 15 is schematically illustrated in Figure 1 and is provided with an embossing disc 16 for producing embossed characters on a tape 17. This type of embossing tool has a built-in cutter for cutting off the required length of embossed tape. For producing marking devices according to the invention the tool would also be provided with a punching device for punching out the holes 5 at the ends of each marking device.

As illustrated in Figure 2, the marking devices may be punched out from a sheet 18 of a suitable plastic material, leaving bridge portions 19 at the ends of a row of marking devices, so that they may be removed from the sheet by breaking through said bridges. This embodiment is of special advantage in for instance large electrical installations, since the sheet can be printed with the appropriate markings on the marking devices and with indications of to which section of the installation the markers belong. In this way the appropriate marking devices will be at hand for each phase of the installation work, and there is little risk that the marking of a single wire or cable will be omitted.

In the embodiment according to Figure 3, as in the embodiment of Figure 2, the marking devices are stamped out of, but not completely separated from, a sheet of plastic material 20 which has been provided with printed legends in the areas constituting the middle portions of the individual stamped-out strips of material forming the marking devices, said legends constituting the identifying marking of the marking devices. Easily breakable connected bridges 21 are left at the ends of each marking device.

A suitable material for the sheet 20 is polyester of a thickness enough to give the punched-out marking devices the required degree of resiliency. One advantage of polyester is that it will not give off any hydrochloric acid in the case of a fire. A scratch-resistant marking of the marking devices is obtained by printing the markings in reverse on one side of a clear, transparent sheet of polyester and thereafter provide that side with an opaque coating providing a contrasting background for the markings when these are viewed from the other side of the sheet. For instance, if the printing is in black, the coating is preferably white or lightly coloured.

The invention is not limited to the embodiments hereinbefore described, which may be modified within the scope of the appended claims.

## Claims

1. A device for the marking of elongated objects such as electrical single wires or cables, tubes, pipes or the like and comprising a substantially flat, oblong piece (1) of material having an intermediate portion (3) and end portions (9) said end portions being provided with openings (5) and further being capable of bending relative to said intermediate portion for moving said openings into substantial axial alignment, said intermediate portion (3) between said opening (5) being adapted for carrying marking symbols, characterized thereby, that the device is made of a material which is at least slightly resilient, so that the material tends to straighten out the bent-around end portions (9), that each opening (5) is wedge-shaped, tapering off towards the ends of the marking device (1), the broader end of the opening (5) located adjacent to said intermediate portion (3) being of a dimension such that the opening will easily receive the elongated object (7) when the end portions are bent relative to the intermediate portion (3) and the narrower portion of the opening (5) being of a dimension such that the side edges of the opening will frictionally engage the elongated object (7) when said end portions of the marking device (1) are straightened out.

2. A device as claimed in claim 1, characterized in, that it is made from a flat piece of material of uniform thickness, said intermediate portion (3) being adapted to carry a marking, e.g. in the form of printing, applied to one side thereof.

3. A tool for producing marking devices according to claim 1, characterized in, that it consists of an embossing tool (15) with an embossing disc (16) for producing embossed characters on a tape (17), said tool being provided with punching means for providing the tape with punched-out holes forming said openings (5) in each marking device for receiving the object (7) which is to be marked.

4. A method of manufacturing marking devices of the kind claimed in claim 2, characterized in, that a sheet (18; 20) of a flexible, slightly resilient material is provided with a number of spaced, printed legends each constituting the marking of a marking device, and that a marking device in the form of an oblong piece of material with an opening (5) at each end is stamped out of the material around each printed legend, leaving easily breakable connecting bridges (19; 21) maintaining the marking devices connected with the sheet.

5. A method as claimed in claim 4, characterized in that the printing is made in reverse on one side of a transparent sheet (20), the printed side of the sheet thereafter being provided with an opaque coating having a colour contrasting with the printing.

6. A method for applying a marking device according to claim 1 on a wire, cable, tube, pipe or the like, characterized in, bending the oblong piece (1) of material, passing it on the wire (7) or the like to the desired position, letting said oblong piece straighten out by its own resilience, pressing the mid portion of said oblong piece against the wire or the like and thus providing frictional engagement between the edges of the openings (5) in said oblong piece and the wire or the like.

**Patentansprüche**

1. Vorrichtung zum Markieren langgestreckter Gegenstände wie elektrische Einzeldrähte oder Kabel, Schläuche, Rohre und dergleichen, und die ein weitgehend flaches, langgestrecktes Materialstück (1) aufweist, das einen Zwischenabschnitt (3) und Endabschnitte (9) aufweist, welche Endabschnitte mit Oeffnungen (5) ausgerüstet sind und weiter imstande sind, sich relativ zum Zwischenabschnitt zu biegen um die Oeffnungen in einen weitgehend axial ausgerichteten Zustand zu bewegen, welcher Zwischenabschnitt (3) zwischen den Oeffnungen (5) zum Tragen von Markierungszeichen ausgebildet ist, dadurch gekennzeichnet, dass die Vorrichtung aus einem Material gemacht ist, das mindestens einwenig nachgiebig ist, so dass das Material bestrebt ist, die umgebogenen Endabschnitte (9) geradezurichten, dass jede Oeffnung (5) keilförmig ist und gegen die Enden der Markierungsvorrichtung (1) zusammenläuft, das breitere Ende der Oeffnung (5), das neben dem Zwischenabschnitt (3) angeordnet ist ein solches Mass aufweist, dass die Oeffnung dann einfach den langgestreckten Gegenstand (7) aufnimmt, wenn die Endabschnitte relativ zum Zwischenabschnitt (3) gebogen sind, das schmalere Ende der Oeffnung (5) ein solches Mass aufweist, dass die Seitenwände dann im Reibeingriff mit dem langgestreckten Gegenstand (7) kommen, wenn die Endabschnitte der Markiervorrichtung (1) geradegerichtet sind.

2. Vorrichtung nach Anspruch 1, dadurch gekennzeichnet, dass sie aus einem flachen Materialstück mit einer gleichförmigen Dicke hergestellt ist, und dass der Zwischenabschnitt zum Tragen einer Markierung, z.B. in Form eines Drukkes, der auf einer Seite desselben aufgebracht ist, ausgebildet ist.

3. Werkzeug zur Herstellung von Markiervorrichtung nach Anspruch 1, dadurch gekennzeichnet, dass es aus einem Prägwerkzeug (15) mit einer Prägscheibe (16) zum Erzeugen geprägter Zeichen auf einem Band (17) besteht, welches Werkzeug mit Stanzmitteln ausgerüstet ist, die dazu dienen, das Band mit ausgestanzten Löchern zu versehen, die in jeder Markiervorrichtung die zur Aufnahme des zu markierenden Gegenstandes (7) dienenden Oeffnungen (5) bilden.

4. Verfahren zur Herstellung von Markiervorrichtungen nach Anspruch 2, dadurch gekennzeichnet, dass ein Blatt (18; 20) aus einem biegsamen, ein wenig nachgiebigen Material mit einer Anzahl im Abstand angeordnete, gedruckte Inschriften ausgerüstet wird, wovon jede die Markierung einer Markierungsvorrichtung bildet, und dass aus dem Material um jede gedrucke Inschrift herum eine Markiervorrichtung in der Form eines langgestreckten Materialstückes mit jeweils einer Oeffnung (5) bei jedem Ende ausgestanzt wird, wobei einfach zerbrechbare Verbindungsbrücken (19; 21) belassen werden, welche die Markiervorrichtungen mit den Blatt verbunden halten.

5. Verfahren nach Anspruch 4, dadurch gekennzeichnet, dass das Drucken im Negativ auf einer Seite eines lichtdurchlässigen Blattes (20) ausgeführt wird, und darauf die bedruckte Seite des Blattes mit einem lichtundurchlässigen Ueberzug versehen wird, welcher eine zum Druck kontrastierende Farbe aufweist.

6. Verfahren zum Aufbringen einer Markiervorrichtung nach Anspruch 1 auf einen Draht, ein Kabel, einen Schlauch, ein Rohr und dergleichen, dadurch gekennzeichnet, dass das langgestreckte Materialstück (1) gebogen wird, auf dem Draht (7) oder dergleichen in die erwünschte Stellung geschoben wird, das langgestreckte Stück aufgrund seiner Eigenelastizität sich strecken gelassen wird, der Mittelabschnitt des langgestreckten Stückes gegen den Draht oder dergleichen gedrückt wird, um einen Reibeingriff zwischen den Rändern der Oeffnungen (5) im langgestreckten Stück und dem Draht oder dergleichen zu erstellen.

## Revendications

1. Un dispositif de repérage pour objets allongés tels que fils simples ou câbles électriques, tubes, conduits ou analogues, et comprenant une pièce (1) oblongue, essentiellement plate d'une matière ayant une partie (3) intermédiaire et des parties d'extrémité (9), lesdites parties d'extrémité étant munies d'ouvertures (5) et étant, en outre, capables de se replier par rapport à ladite partie intermédiaire pour amener lesdites ouvertures pratiquement en alignement axial, ladite partie intermédiaire (3) entre lesdites ouvertures (5) étant adaptée pour porter des symboles de repérage, caractérisé en ce que, le dispositif est réalisé en une matière qui est au moins légèrement élastique, de telle sorte que la matière ait tendance à redresser le pliage autour des parties d'extrémités (9), et en ce que chaque ouverture (5) est en forme de coin, effilée vers les extrémités du dispositif de repérage (1), l'extrémité la plus large de l'ouverture (5) qui est adjacente à ladite partie intermédiaire (3) étant d'une dimension telle que l'ouverture recevra facilement l'objet allongé (7) lorsque les parties d'extrémité sont repliées par rapport à la partie intermédiaire (3) et la partie la plus étroite de l'ouverture (5) étant d'une dimension telle que les bords latéraux de l'ouverture seront en prise par friction avec l'objet allongé (7) lorsque lesdites parties d'extrémité du dispositif de repérage (1) sont redressées.

2. Un dispositif selon la revendication 1, caractérisé en ce qu'il, est réalisé à partir d'une pièce plate de matière d'épaisseur uniforme, ladite partie intermédiaire (3) étant adaptée à porter un repérage, par exemple sous forme d'impression, appliquée sur l'un des côtés de celle-ci.

3. Un outillage pour la fabrication de dispositifs selon la revendication 1, caractérisé en ce qu'il comprend, un outil d'estampage (15) avec un disque d'estampage (16) pour produire des caractères en relief sur un ruban (17), ledit outil étant muni de moyens de poinçonnage pour ménager sur le ruban des trous poinçonnés formant lesdites ouvertures (5) dans chaque dispositif de repérage pour recevoir l'objet (7) qui doit être marqué.

4. Une méthode pour la fabrication de dispositifs de repérage du type décrit à la revendication 2, caractérisé en ce que, une feuille (18; 20) d'une matière flexible, légèrement élastique, est munie de plusieurs légendes imprimées, espacées, chacune constituant le repérage d'un dispositif de repérage et en ce qu'un dispositif de repérage sous forme d'une pièce oblongue de matière avec une ouverture (5) à chaque extrémité, est découpée de la matière autour de chaque légende imprimée en laissant des ponts de liaison (19; 21) facilement cassables, maintenant les dispositifs de repérage reliés à la feuille.

5. Une méthode selon la revendication 4, caractérisée en ce que, l'impression est obtenue à l'envers sur l'une des côtés de la feuille transparente (20), le côté imprimé de la feuille étant ensuite pourvu d'un revêtement opaque d'une couleur contrastant avec l'impression.

6. Une méthode pour l'utilisation d'un dispositif de repérage selon la revendication 1, sur un fil, câble, tube, conduit ou analogue, consistant essentiellement, à replier la pièce oblongue (1) de matière pour la faire passer sur le fil (7) ou analogue dans une position désirée, en laissant ladite pièce oblongue s'étirer sous l'effet de sa propre élasticité, à comprimer la partie médiane de ladite pièce oblongue contre le fil ou analogue et à produire ainsi un engagement à friction entre les bords des ouvertures (5) ménagées dans ladite pièce oblongue et le fil ou analogue.

FIG. 1

FIG. 2

FIG. 3

FIG. 4a

FIG. 4b